# EUROPÄISCHE PATENTSCHRIFT

(11) **EP 1 398 144 B1**
(45) Veröffentlichungstag und Bekanntmachung des Hinweises auf die Patenterteilung: **10.11.2010**
(21) Anmeldenummer: 03019639.8
(22) Anmeldetag: 05.09.2003
(51) Int. Cl.: B32B 37/12

(54) **Laminiertes Blendenelement**
Laminated trim element
Elément d'habillage stratifié

(30) Priorität: 16.09.2002 DE 10242887
(43) Veröffentlichungstag der Anmeldung: 17.03.2004
(73) Patentinhaber: Sellner GmbH, 91564 Neuendettelsau (DE)
(72) Erfinder: Engelhard, Jürgen, 91564 Neuendettelsau (DE); Sellner, Norbert, 91564 Neuendettelsau (DE); Leimeister, Thomas, 91564 Neuendettelsau (DE)
(74) Vertreter: Sperling, Rüdiger

(56) Entgegenhaltungen:
- EP-A- 0 612 609
- EP-A- 1 013 414
- DE-A- 10 105 893
- DE-A- 19 706 712
- DE-C- 19 523 900
- FR-A- 2 796 388

## Beschreibung

Die vorliegende Erfindung betrifft ein laminiertes Blendenelement, insbesondere betrifft sie ein Blendenelement, bei dem das zum Laminieren verwendete Klebemittel durch Kanäle verteilt wird.

Die zunehmende Bedeutung guten Designs auch im industriellen Bereich erfordert in steigendem Maße komplexe Techniken zur Realisierung der gewünschten Oberfläche der neuen Objekte. Aufgrund der bei vielen Produkten notwendigen Konzessionen an die Gestaltung einer Oberfläche oder eines Gehäuses ist man in vielen Fällen dazu übergegangen, den technisch bedingten notwendigen Unterbau von der eigentlichen Oberfläche zu trennen, und die Oberfläche in Form von Blenden dem Produkt hinzuzufügen.

So sind beispielsweise im Automobilbau die meisten der im Innenraum verwendeten Formteile von komplexem Aufbau. Armaturentafel, Seitenverkleidungen und andere Teile müssen aus sicherheitstechnischen Gründen bestimmten Anforderungen genügen. Die Fertigung aus Kunststoffen führt jedoch häufig dazu, dass die Teile als solche unansehnlich sind. Daher bieten die Automobilhersteller serienmäßig oder als Ausstattungsvariante alternative Oberflächen statt der Standardkunststoffteile an. Diese bestehen zumeist aus sogenannten Zierblenden, die einen Oberflächeneindruck von verschiedenen Holz-, Metall- oder Kohlefasersorten erwecken. Aufgrund der häufig komplex gekrümmten Oberflächen ist es jedoch zumeist nicht einfach, die gewählten Materialien formgebend auf die Oberfläche aufzukleben oder sonstwie zu befestigen. Daher werden Zierblenden auf eine Unterbau bzw. einem Kern angeordnet, der hinsichtlich seiner Form an die Form der Zierblende angepasst ist. Diese Teile sind in einfacher Weise vorzufertigen und können als fertiges Montagestück im Werk aufgeclippt oder sonst wie befestigt werden, ohne dass ein großer Aufwand notwendig ist. Auch auf anderen Gebieten der Technik, wie beispielsweise bei Computerkomponenten oder Stereoanlagen, werden ähnliche Zierblenden verwendet, um einen vom Designer gewünschten Oberflächeneindruck zu erzielen. Auch hier sind häufig laminierte Blendenelemente gewünscht, die aus einem Kernteil und einer Blende bestehen. Die Blende kann je nach Einsatz aus unterschiedlichem Material bestehen und somit verschiedenartiges Design aufweisen. Als Material kann Metall, Holzfurnier oder Kunststoff gewählt werden. Im folgenden wird die Blende als Blendenplatte bezeichnet.

Kernteil und Blende werden miteinander durch Laminieren verbunden. Hierzu wird ein Klebstoff auf die Oberfläche des Kernteils aufgebracht, nachdem dieses in eine Werkstückhalterung eingesetzt worden ist, und nach Auflegen der Blende wird der zum Laminieren notwendige Druck mittels eines Laminierstempels auf die Blende aufgebracht, woraufhin diese mittels des Klebemittels mit dem Kernteil laminiert wird.

Aus fertigungstechnischen Gründen wird zumeist der Klebstoff in Form von Streifen aufgebracht. Dieser weicht beim Laminieren zur Seite aus und soll eine Schicht möglichst gleicher Dicke zwischen Kernteil und Blende bilden. Häufig jedoch verläuft der Klebstoff beim Laminieren nicht gleichmäßig, so dass unerwünschte Aufwölbungen der Blende den optischen Eindruck stören.

Aus der FR 2 796 388 ist ein Oberflächenbehandlungsverfahren bekannt, bei dem die Oberfläche vor dem Aufbringen von Kleber aufgeraut wird. Dabei wird die Rauheit, d.h. Rillen vorzugsweise durch Photablation oder Elektroerosion erzeugt.

Es ist daher die Aufgabe der vorliegenden Erfindung, ein Blendenelement bereit zu stellen, welches aufgrund der gleichmäßigen Verteilung des Klebemittels eine gleichmäßig gewölbte oder ebene Oberfläche hat, die den Designvorgaben entspricht.

Diese Aufgabe wird erfindungsgemäß gelöst durch die Bereitstellung eines laminierten Blendenelements gemäß dem unabhängigen Patentanspruch 1. Weitere vorteilhafte Ausgestaltungen und Details der vorliegenden Erfindung ergeben sich aus den abhängigen Patentansprüchen, der Beschreibung und den beigefügten Zeichnungen.

Der Erfindung liegt die Idee zugrunde, ein gleichmäßiges Verteilen des Klebstoffs zwischen der Blende und dem Kernteil zu erzielen.

Die Erfindung ist daher gerichtet auf ein laminiertes Blendenelement, welches aufweist:
ein Kernteil;
ein auf dem Kern aufgebrachtes Klebemittel; und
eine auf dem Kernteil positionierte, durch das Klebemittel mit dem Kernmittel laminierte Blende, wobei dieses Blendenelement dadurch gekennzeichnet ist, dass das Kernteil eine Anordnung einer Mehrzahl von Vertiefungen zur Aufnahme und Verteilung von Klebemittel während des Laminierens der Blende auf das Kernteil aufweist.

Unter Laminieren ist hierbei das flächige Inkontaktbringen der Unterseite der Blende mit der die Vertiefungen und Kanäle tragenden Oberseite des Kernteils zu verstehen. Unter einem Klebemittel ist jeglicher üblicherweise zum Laminieren verwendeter Klebstoff zu verstehen, insbesondere solche Klebstoffe, die in Volumina verwendet werden müssen, bei denen es zu einer ungleichmäßigen Verteilung kommen kann.

Der Kernteil kann als Formteil ausgebildet sein, welches auf der Rückseite so ausgestaltet ist, dass es zu der zu verblendenden Rohoberfläche passt. Auf der anderen Seite muss es eine bis auf Vertiefungen und Kanäle möglichst ebene Oberfläche aufweisen, die jedoch gewünschte Wölbungen oder andere Formen enthalten kann. Die Blende muss an ihrer Unterseite ebenfalls glatt und entweder in der Form passend zur Oberseite des Kernteils sein oder durch ihre Flexibilität beim Laminieren in die entsprechende Form gebracht werden können.

Vorzugsweise sind die Vertiefungen mit den Kanälen untereinander verbunden. Vorzugsweise verbinden die Kanäle jeweils so viele Vertiefungen miteinander, dass ein gleichförmiges Verteilen des Klebemittels zwischen den Vertiefungen während des Laminierens von Kernteil mit Blende sichergestellt ist.

Die Vertiefungen können in unterschiedlichster Weise auf der Oberseite des Kernteils angeordnet sein. Sie können beispielsweise empirisch anhand der Oberflächengestaltung des Kernteils verteilt sein oder vorzugsweise in Reihen und zu diesen orthogonalen Spalten auf der Oberfläche des Kernteils angeordnet sein. Auch bezüglich der zwischen Vertiefungen laufenden Kanäle stehen dem Konstrukteur verschiedenste Möglichkeiten zur Verfügung. So kann beispielsweise auf die Aufbringung des Klebemittels Rücksicht genommen werden und bei streifenweisem Aufbringen von Klebemittel eine Vorzugsrichtung für die Verteilung festgelegt werden, in der mehr Kanäle angeordnet werden als in anderen Richtungen. Auch kann nach Probelaminierungen das zur Herstellung des Kernteils verwendete Werkzeug noch modifiziert werden, um Kanäle hinzu zu fügen oder weg zu nehmen. Dies kann durch Wegfräsen oder Aufschweißen von Stegen geschehen, die später die Kanäle ausprägen.

Besonders bevorzugt wird es, wenn die Kanäle von Vertiefung zu Vertiefung innerhalb jeder Reihe und/oder jeder Spalte verlaufen. Auf diese Weise werden entweder die Vertiefungen einer Reihe oder die einer Spalte jeweils miteinander verbunden oder es werden Verbindungen sowohl zwischen Vertiefungen einer Reihe als auch einer Spalte von jeder der Vertiefungen aus gemacht. Hierbei kann die Anordnung der Kanäle so ausgestaltet sein, dass sie zwischen jeder Vertiefung und den jeweils direkt benachbarten Vertiefungen verlaufen. Bei einer orthogonalen Anordnung in Reihen und Spalten bedeutet dies beispielsweise, dass in den Ecken des Kernteils die Vertiefungen mit den drei Nachbarvertiefungen, an den Kanten mit den fünf Nachbarvertiefungen und im mittleren Bereich der Oberfläche des Kernteils jede Vertiefung mit den acht benachbarten Vertiefungen durch Kanäle verbunden werden kann. Selbstverständlich können hierbei Mischformen und Vorzugsrichtungen festgelegt werden, in denen mehr oder weniger Kanäle verwendet werden.

Eine andere mögliche Anordnung der Vertiefung besteht darin, sie in einem wabenförmigen Muster zueinander anzuordnen, so dass jede Vertiefung unmittelbar von sechs anderen Vertiefungen, die in einem gleichmäßigen Dreieck um diese Vertiefung herum angeordnet sind, umgeben ist. In einem solchen Fall können die Kanäle zwischen jeder Vertiefung in jeweils direkt benachbarten Vertiefungen verlaufen, d.h. im Falle eckständiger Vertiefungen mit zwei anderen Vertiefungen, im Falle randständiger mit drei bzw. fünf benachbarten Vertiefungen und im Falle auf der Hauptfläche des kernteils befindlicher Verbindungen mit sechs weiteren, benachbarten Vertiefungen durch Kanäle verbunden sein.

Die Vertiefungen können beispielsweise einen kreisförmigen Grundriss aufweisen und als Hohlzylinder oder linsenförmige oder kugelförmige Vertiefungen ausgeführt sein. Genau so ist es auch möglich, andere Formen von Vertiefungen im Grundriss zu verwenden, beispielsweise sechseckige, fünfekkige oder viereckige. Die Vertiefungen weisen vorzugsweise eine Tiefe von 0,1 bis 1 mm auf, jedoch hängt die konkret anzuwendende Tiefe von der Fläche des Kernteils und der Menge an aufgebrachtem Klebstoff beim Laminieren ab. Die Vertiefungen können einen gegenseitigen Abstand gemessen von Vertiefungsmitte zu Vertiefungsmitte von 10 mm bis 25 mm aufweisen, wobei auch diese Abstände von der konkreten Ausgestaltung von Ausführungsformen gemäß der vorliegenden Erfindung abhängen, z.B. Materialdicke der Blende, Viskosität des Klebers und andere Parameter.

Grundsätzlich sind dem Fachmann auf dem Gebiete der Blendenherstellung geeignete Abmessungen und Abstände bekannt oder können von ihm bestimmt werden.

Die Kanäle können eine Breite von 2 bis 5 mm aufweisen, und eine Tiefe von 0,1 bis 1,5 mm, wobei die konkreten Dimensionierungen von empirischen Werten, der Menge des verwendeten Klebemittels sowie der Viskosität oder dem Abtrocknungsverhalten des Klebemittels beeinflusst werden können.

Somit kann eine Dichte an Vertiefung im Bereich zwischen 1600 bis 10 000 Vertiefungen pro m² vorliegen. Der Fachmann kann aber nach Bedarf von diesen Werten abweichen.

Die Kanäle können vorzugsweise einen rechteckigen, dreiekkigen oder runden Querschnitt aufweisen, der neben den Notwendigkeiten der Verteilung auch von den zur Verfügung stehenden Möglichkeiten oder Vorteilen bei der Herstellung der Werkzeuge für das Kernteil abhängen kann. Wie bereits ausgeführt, können verschiedene Arten von Klebemitteln verwendet werden. Gemäß üblicher Techniken des Laminierens solcher Blendenelemente ist das Klebemittel vorzugsweise ein pastöses Material, das während des Laminierens von Kernteil und Blende zu einer Schicht von im wesentlichen homogener Dicke zwischen Kernteil und Blende umgeformt wird. Nur durch eine homogene Dicke lässt sich das Auftreten unerwünschter Vorwölbungen oder Dellen in der Blende unterbinden.

Um eine Befestigung des erfindungsgemäßen Blendenelements am Einsatzort zu ermöglichen, kann das Kernteil weiterhin zumindest einen Halter zur Befestigung des Blendenelements auf einem Untergrund aufweisen. Entsprechende Haltemechanismen sind dem Fachmann auf dem Gebiete der Blendentechnik geläufig und können beispielsweise Einsteckelemente zur Aufnahme in entsprechende Öffnungen des Untergrunds sein. Solche Einsteckelemente können mit Widerhaken oder ähnlichem ausgestattet sein, um ein nachträgliches Verrutschen nach der Montage des Blendenelements auf dem Untergrund zu verhindern.

Insbesondere wird es bevorzugt, dass das Blendenelement eine Blende für einen Fahrzeuginnenraum ist.

Dementsprechend, jedoch auch anderen Anwendungen offen, kann die Blende beispielsweise aus Metallblech, einer Kunststoffplatte, Karbonfasern, Holzfurnier oder einem Laminat bestehen. Laminate, beispielsweise aus Holzfurnier und einem weichen Blech, sind entwickelt worden, um das Splitterverhalten von Holzfurnier zu verbessern.

Metalloberflächen, Holzoberflächen oder Kohlefaseroberflächen sind derzeit als Armaturen- und Seitenverkleidungsausgestaltungen bei Kraftfahrzeugen beliebt, so dass diese natürlicherweise bevorzugte Ausführungsformen der Erfindung darstellen werden. Um das Kernteil vollständig oder teilweise vor den Blicken der Nutzer des verblendeten Geräts zu verbergen, kann das Kernteil einen Rand aufweisen und die Blende an zumindest einer Seite des Kernteils über den Rand hinaus geführt und um diesen herum gebogen sein. Auf diese Weise ist der Rand des Kernteils nicht mehr sichtbar, sondern nur noch die Oberfläche der entsprechend gebogenen Blende.

Das Kernteil kann Kunststoff enthalten oder aus Kunststoff bestehen, beispielsweise ein entsprechendes Spritzgussteil sein.

Die vorliegende Erfindung stellt ein Blendenelement bereit, welches die Unregelmäßigkeiten der Blendenoberfläche des Standes der Technik vermeidet, ohne dass seine Herstellung komplizierter würde.

Im folgenden soll die Erfindung unter Bezugnahme auf die Zeichnungen anhand konkretisierter Ausführungsbeispiele näher erläutert werden, wobei:
- Fig. 1: eine schematische Darstellung des Laminiervorgangs und der daran beteiligten Elemente ist;
- Fig. 2: die Oberseite eines Kernteils einer ersten Ausführungsform der vorliegenden Erfindung darstellt;
- Fig. 3: die Anordnung von Vertiefungen und Kanälen gemäß einer weiteren Ausführungsform der vorliegenden Erfindung zeigt;
- Fig. 4: eine weitere Anordnung von Vertiefungen und Kanälen gemäß einer weiteren Ausführungsform der vorliegenden Erfindung zeigt; und
- Fig. 5: noch eine Anordnung von Vertiefungen und Kanälen gemäß einer weiteren Ausführungsform der vorliegenden Erfindung zeigt.

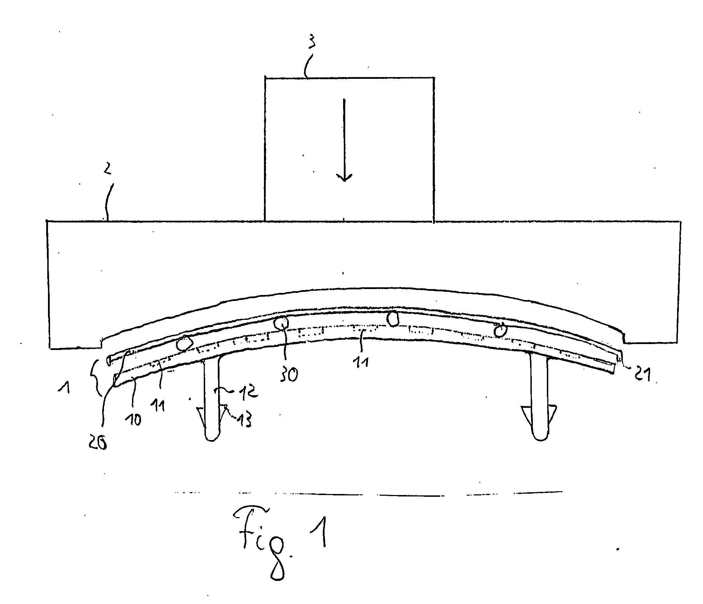

Fig. 1 stellt schematisch die zum Laminieren notwendigen Elemente dar. Das Blendenelement 1 besteht aus Kernelement 10, Blende 20, im vorliegenden Fall eine Blendenplatte, und raupenförmig aufgebrachten Streifen von Klebemittel 30, hier im Querschnitt gezeigt. Die sandwichartige Anordnung dieser Elemente wird mittels eines Laminierstempels 2 und eines einen Druck ausübenden Stößels 3 zusammengedrückt. Nicht dargestellt ist der ebenfalls zum Laminieren notwendige Werkstückhalter, in den das Kernteil 10 eingesetzt ist. Das Kernteil 10 besteht in der vorliegenden Ausführungsform neben dem eigentlichen, hier gebogenen Element mit Vertiefungen 11 sowie Einsteckelementen 12 mit Widerhaken 13, die so ausgestaltet sein können, dass sie beim Einführen in eine Öffnung eines zu verblendenden Untergrunds nachgeben und nach dem Passieren der Öffnung in ihre Form zurückkehren, um den Widerhaken zu bilden. Die Blende 20 weist weiterhin an zumindest einer, hier dargestellt an zwei, ihrer Seiten eine Umwölbung auf, welche um die Seite des Kernteils 10 herum reichen kann und dieses von allen oder einigen Seiten so einschließt, dass der Benutzer das Kernteil nicht mehr wahrnehmen kann.

Durch den beim Laminieren ausgeübten Druck des Stößels 3 werden die Klebemittelraupen 30 flach gedrückt und laufen zumindest teilweise in die Vertiefungen, wo überschüssiges Klebemittel aufgenommen wird.

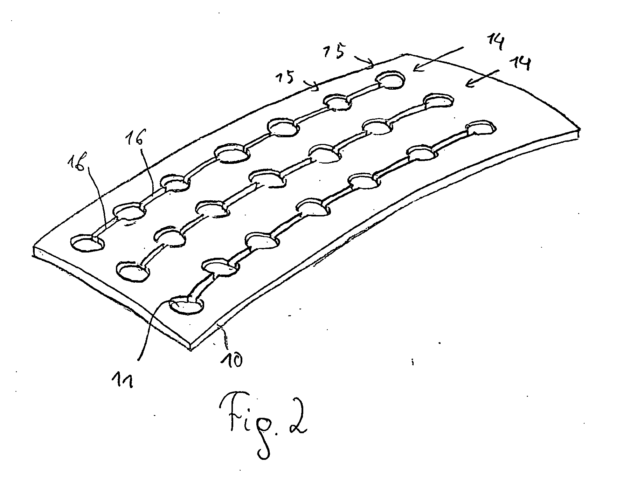

Die Oberfläche eines Kernteils gemäß einer ersten Ausführungsform der Erfindung ist in Fig. 2 gezeigt. Die Vertiefungen 11 sind auf der Oberfläche des Kernteils 10 in Reihen 14 und Spalten 15 angeordnet. Im vorliegenden Ausführungsbeispiel sind nur Vertiefungen der Reihen 14 durch Kanäle 16 miteinander verbunden, wobei von jeder Vertiefung 16 an der Reihe 14 bis auf die endständigen Vertiefungen zwei Kanäle ausgehen. Ein Ausgleich überschüssigen Klebemittels kann hier also nur in Richtung der Reihen 14 erfolgen.

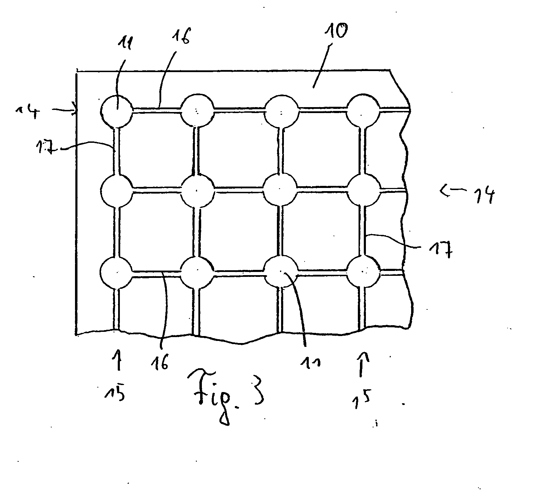

Fig. 3 zeigt eine weitere Ausführungsform eines nur teilweise dargestellten Kernteils 10, bei dem außer den Reihen 14 durch Kanäle 16 auch die Spalten 15 vermittels Kanäle 17 miteinander verbunden sind. Jede Vertiefung weist also zwei Kanäle zum Ausgleich des verlaufenden Klebemittels auf.

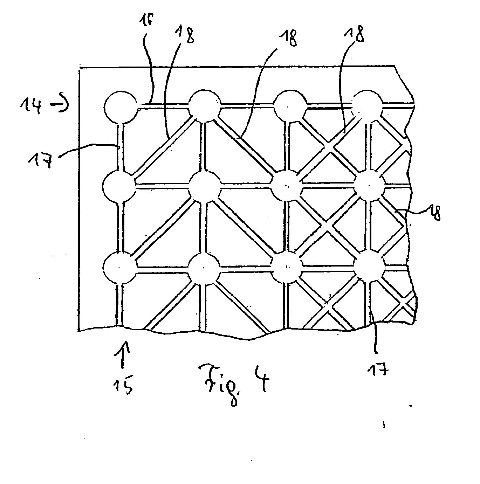

In dem in Fig. 4 dargestellten Ausführungsbeispiel der vorliegenden Erfindung ist die Zahl der Kanäle durch zusätzliche diagonal verlaufende Kanäle 18 weiter vergrößert. Im linken Bereich der Zeichnung verläuft in jedem Viererfeld von Kanälen nur eine Diagonale, während im rechten Bereich der Fig. 4 in einer Variante dieser Ausführungsform die diagonal verlaufenden Kanäle sich überkreuzen.

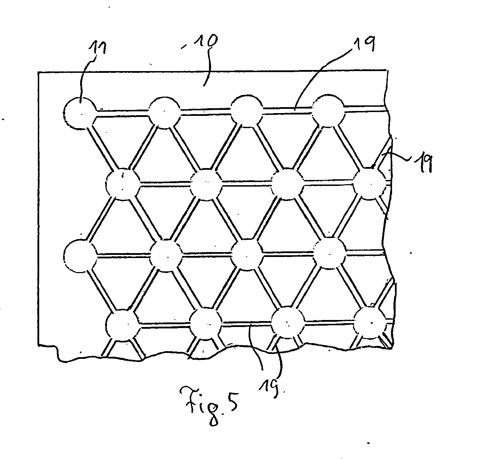

In einer nächsten Ausführungsform der vorliegenden Erfindung wird, wie in Fig. 5 gezeigt, eine wabenförmige Anordnung der Vertiefungen 11 auf der Oberfläche des Kernteils 10 vorgenommen. Bis auf die rand- bzw. eckständigen Vertiefungen sind also alle Vertiefungen 11 von sechs gleichförmig in einem Sechseck angeordneten Nachbarvertiefungen umgeben und mit diesen durch entsprechende Kanäle 19 verbunden. Durch diese Anordnung lässt sich eine kompakte und gleichförmige Dichte der Kanäle und Vertiefungen erzielen.

Es versteht sich, dass die Erfindung nicht auf die dargestellten Ausführungsformen insbesondere der Kanalanordnungen beschränkt sind. Vielmehr ist eine Vielzahl von Varianten denkbar, welche von der dargestellten Lösung auch bei grundsätzlich anders gearteten Ausführungsformen Gebrauch machen, wobei der Schutzumfang der vorliegenden Erfindung durch die Patentansprüche definiert ist.

## Patentansprüche

1. Laminiertes Blendenelement, aufweisend:
ein Kernteil (10);
ein auf dem Kernteil (10) aufgebrachtes Klebemittel (30); und
eine auf dem Kernteil (10) positionierte, durch das Klebemittel (30) mit dem Kernteil (10) laminierte Blende (20); wobei
das Kernteil (10) eine Anordnung einer Mehrzahl von Vertiefungen (11) zur Aufnahme und Verteilung von Klebemittel (30) während des Laminierens der Blende (20) auf das Kernteil (10) aufweist und die Vertiefungen (11) durch Kanäle (16, 17, 18, 19) miteinander verbunden sind;
**dadurch gekennzeichnet, dass** die Kanäle (16, 17, 18, 19) eine Breite von 2 mm bis 5 mm aufweisen.

2. Blendenelement nach Anspruch 1, **dadurch gekennzeichnet, dass** die Kanäle (16, 17, 18, 19) jeweils so viele Vertiefungen (11) miteinander verbinden, dass ein gleichförmiges Verteilen des Klebemittels (30) zwischen den Vertiefungen (11) während des Laminierens von Kernteil (10) mit Blende (20) sichergestellt ist.

3. Blendenelement nach Anspruch 1 oder 2, **dadurch gekennzeichnet, dass** die Vertiefungen (11) in Reihen (14) und zu diesen orthogonalen Spalten (15) auf der Oberfläche des Kernteils (10) angeordnet sind.

4. Blendenelement nach Anspruch 3, **dadurch gekennzeichnet, dass** die Kanäle (16, 17) von Vertiefung (11) zu Vertiefung (11) innerhalb jeder Reihe (14) und/oder jeder Spalte (15) verlaufen.

5. Blendenelement nach einem der Ansprüche 1 bis 4, **dadurch gekennzeichnet, dass** die Kanäle (16, 17, 18) zwischen jeder Vertiefung und den jeweils direkt benachbarten Vertiefungen (11) verlaufen.

6. Blendenelement nach einem der vorangegangenen Ansprüche, **dadurch gekennzeichnet, dass** die Vertiefungen (11) in einem wabenförmigen Muster zueinander angeordnet sind.

7. Blendenelement nach einem der vorangegangenen Ansprüche, **dadurch gekennzeichnet, dass** die Kanäle (19) zwischen jeder Vertiefung (11) und den jeweils direkt benachbarten Vertiefungen (11) verlaufen.

8. Blendenelement nach einem der Ansprüche 1 bis 7, **dadurch gekennzeichnet, dass** die Vertiefungen (11) einen kreisförmigen Grundriss aufweisen.

9. Blendenelement nach einem der Ansprüche 1 bis 8, **dadurch gekennzeichnet, dass** die Vertiefungen (11) ein Tiefe von 0.1 bis 1 um aufweisen.

10. Blendenelement nach einem der Ansprüche 1 bis 9, **dadurch gekennzeichnet, dass** die Vertiefungen (11) einen gegenseitigen Abstand, gemessen von Vertiefungsmitte zu Vertiefungsmitte, von 10 mm bis 25 mm aufweisen.

11. Blendenelement nach einem der Ansprüche 1 bis 10, **dadurch gekennzeichnet, dass** die Vertiefungen (11) eine Dichte von 1600 bis 10 000 Vertiefungen (11) pro Quadratmeter aufweisen.

12. Blendenelement nach mindestens einem der vorhergehenden Ansprüche, **dadurch gekennzeichnet, dass** die Kanäle (16, 17, 18, 19) eine Tiefe von 0.1 bis 1 mm aufweisen.

13. Blendenelement nach mindestens einem der vorhergehenden Ansprüche, **dadurch gekennzeichnet, dass** die Kanäle (16, 17, 18, 19) einen rechteckigen, dreieckigen oder runden Querschnitt aufweisen.

14. Blendenelement nach mindestens einem der vorhergehenden Ansprüche, **dadurch gekennzeichnet, dass** das Klebemittel (30) ein pastöses Material ist, dass durch das Laminieren von Kernteil (10) und Blende (20) zu einer Schicht von im wesentlichen homogener Dicke zwischen Kernteil (10) und Blende (20) geformt ist.

15. Blendenelement nach mindestens einem der vorhergehenden Ansprüche, **dadurch gekennzeichnet, dass** das Kernteil (10) weiterhin aufweist zumindest einen Halter (12) zur Befestigung des Blendenelements auf einem Untergrund.

16. Blendenelement nach Anspruch 15, **dadurch gekennzeichnet, dass** die Halter Einsteckelemente (12, 13) zur Aufnahme in entsprechende Öffnungen eines Untergrunds sind.

17. Blendenelement nach mindestens einem der vorhergehenden Ansprüche, **dadurch gekennzeichnet, dass** es eine Blende für einen Fahrzeuginnenraum ist.

18. Blendenelement nach mindestens einem der vorhergehenden Ansprüche, **dadurch gekennzeichnet, dass** die Blende (20) aus Metallblech, einer Kunststoffplatte, Carbonfaser, Holzfurnier oder einem Laminat besteht.

19. Blendenelement nach mindestens einem der vorhergehenden Ansprüche, **dadurch gekennzeichnet, dass** das Kernteil (10) einen Rand aufweist und die Blende (20) an zumindest einer Seite des Kernteils (10) über dessen Rand hinausgeführt und um diesen herumgebogen ist.

20. Blendenelement nach mindestens einem der vorhergehenden Ansprüche, **dadurch gekennzeichnet, dass** das Kernteil (10) Kunststoff enthält.

## Claims

1. A laminated trim element, comprising:
a core part (10);
an adhesive (30) applied on the core part (10); and
a trim panel (20) arranged on the core part (10) and laminated with the core part (10) by means of the adhesive (30); wherein
the core part (10) comprises an arrangement of a plurality of recesses (11) for receiving and distributing adhesive (30) during laminating the trim panel (20) onto the core part (10), and wherein the recesses (11) are Interconnected by means of channels (16, 17, 18, 19);
**characterized in that** the channels (16, 17, 18, 19) have a width of 2 mm to 5 mm.

2. The trim element according to claim 1, **characterized in that** the channels (16, 17, 18, 19) each Interconnect such a number off recesses (11) that a uniform distribution of the adhesive (30) between the recesses (11) is ensured during laminating the core part (10) with the trim panel (20).

3. The trim element according to claim 1 or 2, **characterized in that** the recesses (11) are arranged on the surface of the core part (10) In rows (14) and columns (15) orthogonal thereto.

4. The trim element according to claim 3, **characterized in that** the channels (16, 17) extend from recess (11) to recess (11) within each row (14) and/or each column (15).

5. The trim element according to one of claims 1 to 4, **characterized in that** the channels (16, 17, 18) extend between each recess and each of the recesses (11) directly adjacent thereto.

6. The trim element according to one of the preceding claims, **characterized in that** the recesses (11) are In a honeycomb arrangement with one another.

7. The trim element according to one of the preceding claims, **characterized in that** the channels (19) extend between each recess (11) and each of the recesses (11) directly adjacent thereto.

8. The trim element according to one of claims 1 to 7, **characterized in that** the recesses (11) comprises a circular plan view.

9. The trim element according to one of claims 1 to 8, **characterized in that** the recesses (11) comprise a depth of 0.1 to 1 mm.

10. The trim element according to one of claims 1 to 9, **characterized in that** the recesses (11) have a mutual spacing of 10 mm to 25 mm as measured between centers of recesses.

11. The trim element according to one of claims 1 to 10, **characterized in that** the recesses (11) comprise a density of 1600 to 10,000 recesses (11) per square meter.

12. The trim element according to at least one of the preceding claims, **characterized in that** the channels (16, 17, 18, 19) comprise a depth of 0.1 to 1 mm.

13. The trim element according to at least one of the preceding claims, **characterized in that** the channels (16, 17, 18, 19) comprise a rectangular, triangular or round cross section.

14. The trim element according to at least one of the preceding claims, **characterized in that** the adhesive (30) is a paste-like material which is formed as a layer of a substantially homogeneous thickness between the core part (10) and the trim panel (20) through laminating the core part (10) with the trim panel (20).

15. The trim element according to at least one of the preceding claims, **characterized in that** the core part (10) further comprises at least one mounting device (12) for attachIng the trim element to a base.

16. The trim element according to claim 15, **characterized in that** the mounting devices are plug-In elements (12, 13) to be received In corresponding openings of a base.

17. The trim element according to at least one of the preceding claims, **characterized in that** it is a trim panel for the interior of a vehicle.

18. The trim element according to at least one of the preceding claims, **characterized in that** the trim panel (20) consists of sheet metal, a plastic plate, carbon fiber, wood veneer or a laminate.

19. The trim element according to at least one of the preceding claims, **characterized in that** the core part (10) comprises an edge and the trim panel (20) extends on at least one side of the core part (10) beyond the edge thereof and Is bent around It.

20. The trim element according to at least one of the preceding claims, **characterized in that** the core part (10) contains plastic.

## Revendications

1. Elément de cache stratifié, présentant :
une partie centrale (10);
un agent adhésif (30) appliqué sur la partie centrale (10); et
un cache (20) stratifié avec la partie centrale (10) par l'agent adhésif (30) et positionné sur la partie centrale (10),
la partie centrale (10) présentant une disposition d'une pluralité de cavités (11) pour la réception et la répartition d'agent adhésif (30) pendant la stratification du cache (20) sur la partie centrale (10) et les cavités (11) étant reliées entre elles par des canaux (16, 17, 18, 19), **caractérisé en ce que** les canaux (16, 17, 18, 19) présentent une largeur de 2 mm à 5 mm.

2. Elément de cache selon la revendication 1, **caractérisé en ce que** les canaux (16, 17, 18, 19) relient entre elles suffisamment de cavités (11) permettant d'assurer une répartition uniforme de l'agent adhésif (30) entre les cavités (11) pendant la stratification de la partie centrale (10) avec le cache (20).

3. Elément de cache selon la revendication 1 ou 2, **caractérisé en ce que** les cavités (11) sont disposées dans des rangées (14) et des colonnes orthogonales à ces dernières sur la surface de la partie centrale (10).

4. Elément de cache selon la revendication 3, **caractérisé en ce que** les canaux (16, 17) s'étendent de la cavité (11) à la cavité (11) à l'intérieur de chaque rangée (14) et/ou chaque colonne (15).

5. Elément de cache selon l'une des revendications 1 à 4, **caractérisé en ce que** les canaux (16, 17, 18) s'étendent entre chaque cavité et les cavités (11) directement attenantes respectivement.

6. Elément de cache selon l'une des revendications précédentes, **caractérisé en ce que** les cavités (11) sont disposées entre elles en nid d'abeille.

7. Elément de cache selon l'une des revendications précédentes, **caractérisé en ce que** les canaux (19) s'étendent entre chaque cavité (11) et les cavités (11) directement attenantes respectivement.

8. Elément de cache selon l'une des revendications 1 à 7, **caractérisé en ce que** les cavités (11) présentent un contour circulaire.

9. Elément de cache selon l'une des revendications 1 à 8, **caractérisé en ce que** les cavités (11) présentent une profondeur de 0,1 à 1 mm.

10. Elément de cache selon l'une des revendications 1 à 9, **caractérisé en ce que** les cavités (11) présentent une distance mutuelle comprise entre 10 et 25 mm mesurée d'un milieu de cavité à un milieu de cavité.

11. Elément de cache selon l'une des revendications 1 à 10, **caractérisé en ce que** les cavités (11) présentent une densité de 1600 à 10 000 cavités (11) par mètre carré.

12. Elément de cache selon au moins l'une des revendications précédentes, **caractérisé en ce que** les canaux (16, 17, 18, 19) présentent une profondeur comprise entre 0,1 et 1 mm.

13. Elément de cache selon au moins l'une des revendications précédentes, **caractérisé en ce que** les canaux (16, 17, 18, 19) présentent une section transversale rectangulaire, triangulaire ou ronde.

14. Elément de cache selon au moins l'une des revendications précédentes, **caractérisé en ce que** l'agent adhésif (30) est un matériau pâteux, **en ce que** la stratification de la partie centrale (10) et du cache (20) forme une couche d'une épaisseur essentiellement homogène entre la partie centrale (10) et le cache (20).

15. Elément de cache selon au moins l'une des revendications précédentes, **caractérisé en ce que** la partie centrale (10) présente en outre au moins un support (12) pour la fixation de l'élément de cache sur une base.

16. Elément de cache selon la revendication 15, **caractérisé en ce que** les supports (12, 13) sont des éléments d'emboîtement (12, 13) venant se loger dans des ouvertures correspondantes d'une base.

17. Elément de cache selon au moins l'une des revendications précédentes, **caractérisé en ce que** le cache est destiné à un habitacle de véhicule.

18. Elément de cache selon au moins l'une des revendications précédentes, **caractérisé en ce que** le cache (20) se compose de tôle de métal, d'une plaque de matière plastique, de fibre de carbone, de placage de bols ou de stratifié.

19. Elément de cache selon au moins l'une des revendications précédentes, **caractérisé en ce que** la partie centrale (10) présente un bord et le cache (20) est amené au moins sur une face de la partie centrale (10) au-dessus de son bord et est plié autour de ce dernier.

20. Elément de cache selon au moins l'une des revendications précédentes, **caractérisé en ce que** la partie centrale (10) contient une matière plastique.
